# EUROPEAN PATENT APPLICATION

(11) **EP 4 776 669 A1**
(43) Date of publication of application: **15.07.2026**
(21) Application number: 24863319.0
(22) Date of filing: 29.08.2024
(51) Int. Cl.: H04W 12/106, H04W 12/0471, H04W 12/037, H04W 84/12, H04L 5/00, H04L 1/00, H04W 4/06

(54) **METHOD AND APPARATUS FOR SUPPORTING PROTECTION FOR CONTROL FRAME IN WIRELESS LAN SYSTEM**

(30) Priority: 06.09.2023 KR 20230118502; 08.09.2023 KR 20230119879; 14.12.2023 KR 20230182363; 25.07.2024 KR 20240098830
(71) Applicant: LG Electronics Inc., Yeongdeungpo-gu Seoul 07336 (KR)
(72) Inventor: BAEK, Sunhee, Seoul 06772 (KR); CHOI, Jinsoo, Seoul 06772 (KR); JANG, Insun, Seoul 06772 (KR); KIM, Geonhwan, Seoul 06772 (KR); YOON, Yelin, Seoul 06772 (KR); CHA, Dongju, Seoul 06772 (KR)
(74) Representative: Mooser, Sebastian Thomas
(86) International application number: PCT/KR2024/096104
(87) International publication number: WO 2025/053740

(57) **Abstract**

Disclosed are a method and an apparatus for supporting protection for a control frame in a wireless LAN system. A method performed by a first STA in a wireless local area network (WLAN) system according to one embodiment of the present disclosure may comprise the steps of: checking key information related to protection for a control frame; receiving, from a second STA, a control frame to which the protection is applied; and performing an integrity check on the control frame on the basis of the key information. Here, a user information list field in the control frame includes one or more specific field structures including protection information for the integrity check, and each specific field structure may include an association ID (AID) field set to a value related to the protection information.

## Description

### [Technical Field]

The present disclosure relates to a method and device for supporting protection for a control frame in a wireless local area network (WLAN) system.

### [Background]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.1 1ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

The technical problem of the present disclosure is to provide a method and device supporting protection for a control frame in a wireless LAN system.

The technical problem of the present disclosure is to provide a method and device for supporting an integrity check based on BIP (Broadcast/multicast integrity protocol) for a trigger frame in a wireless LAN system.

The technical problem of the present disclosure is to provide a method and device for configuring a trigger frame format that takes into account a case where a user information field for a station (STA) that does not support protection for a trigger frame in a wireless LAN system is included in the trigger frame.

The technical objects to be achieved by the present disclosure are not limited to the above-described technical objects, and other technical objects which are not described herein will be clearly understood by those skilled in the pertinent art from the following description.

### [Technical Solution]

A method performed by a first station (STA) in a wireless local area network (WLAN) system according to an aspect of the present disclosure may comprise: identifying key information related to protection for a control frame; receiving, from a second STA, the control frame to which the protection is applied; and performing an integrity check on the control frame based on the key information. Herein, a user information list field in the control frame may include one or more specific field structures in which protection information for the integrity check is included, and each specific field structure may include an association ID (AID) field set to a value related to the protection information.

A method performed by a second station (STA) in a wireless local area network (WLAN) system according to an additional aspect of the present disclosure may comprise: identifying key information related to protection for a control frame; constructing, based on the key information, the control frame including protection information for an integrity check; and transmitting, to a first STA, the control frame to which the protection is applied. Herein, a user information list field in the control frame may include one or more specific field structures in which the protection information is included, and each specific field structure may include an association ID (AID) field set to a value related to the protection information.

### [Technical Effects]

According to various embodiments of the present disclosure, a method and device supporting protection for a control frame in a wireless LAN system may be provided.

According to various embodiments of the present disclosure, a method and device for supporting BIP-based integrity check for a trigger frame in a wireless LAN system may be provided.

According to various embodiments of the present disclosure, a method and apparatus for configuring a trigger frame format considering a case where a user information field for a station (STA) that does not support protection for a trigger frame in a wireless LAN system is included in the trigger frame may be provided.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram showing an exemplary format of a trigger frame to which the present disclosure may be applied.
FIG. 9 illustrates an example of a BIP MMPDU format that may be applied to the present disclosure.
FIG. 10 illustrates an example of a protection information field/subfield format according to an embodiment of the present disclosure.
FIG. 11 illustrates an example of a trigger frame configuration supporting an integrity check according to an embodiment of the present disclosure.
FIG. 12 illustrates another example of a trigger frame configuration supporting an integrity check according to an embodiment of the present disclosure.
FIG. 13 illustrates still another example of a trigger frame configuration supporting an integrity check according to an embodiment of the present disclosure.
FIG. 14 illustrates still another example of a trigger frame configuration supporting an integrity check according to an embodiment of the present disclosure.
FIG. 15 illustrates an operation of a transmitting STA supporting an integrity check for a trigger frame according to the present disclosure.
FIG. 16 illustrates an operation of a receiving STA supporting an integrity check for a trigger frame according to the present disclosure.
FIG. 17 is a diagram for describing an example of a method performed by a first STA according to the present disclosure.
FIG. 18 is a diagram for describing an example of a method performed by a second STA according to the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

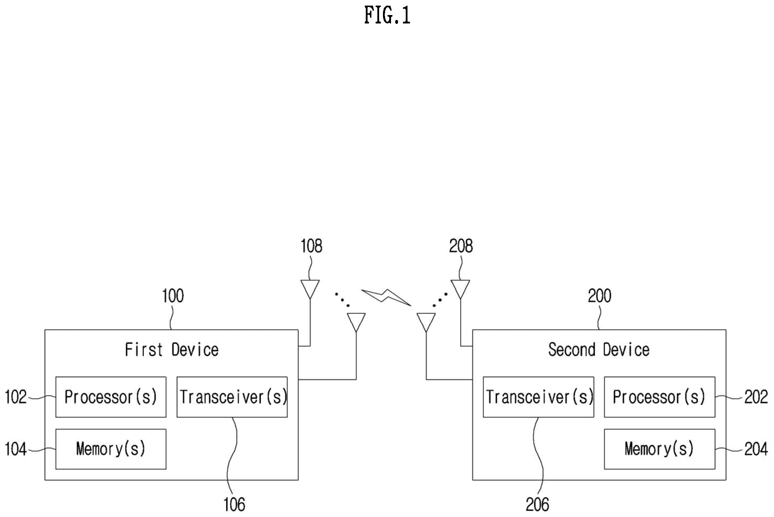

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

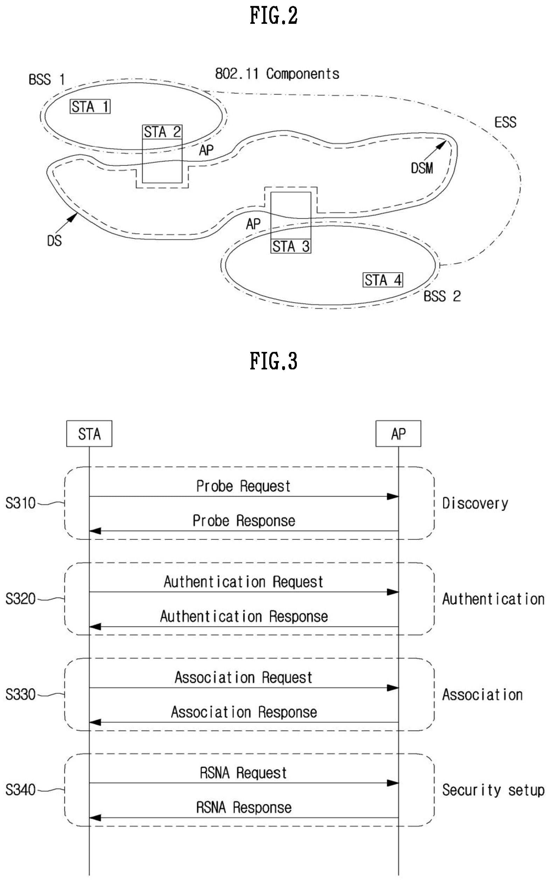

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

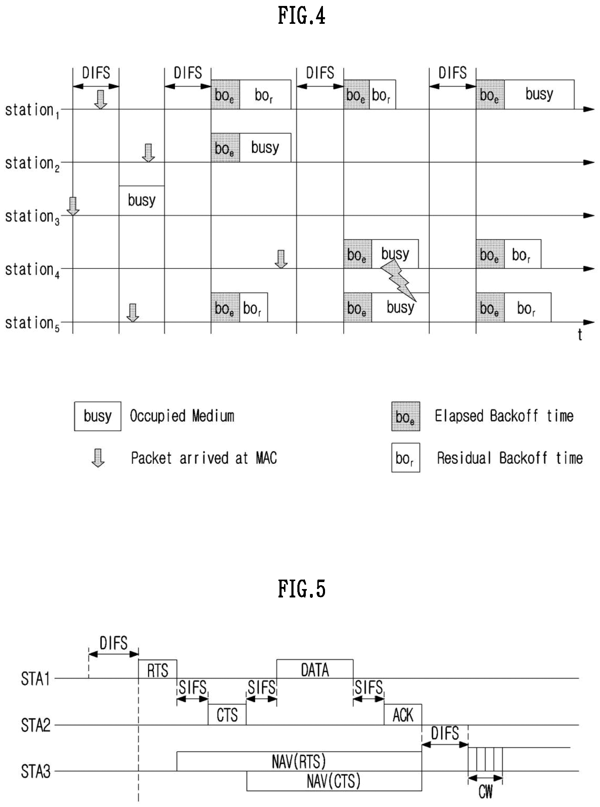

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

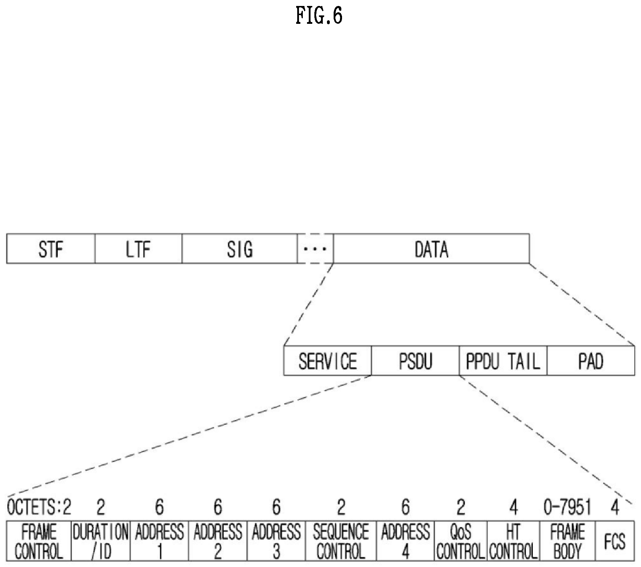

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

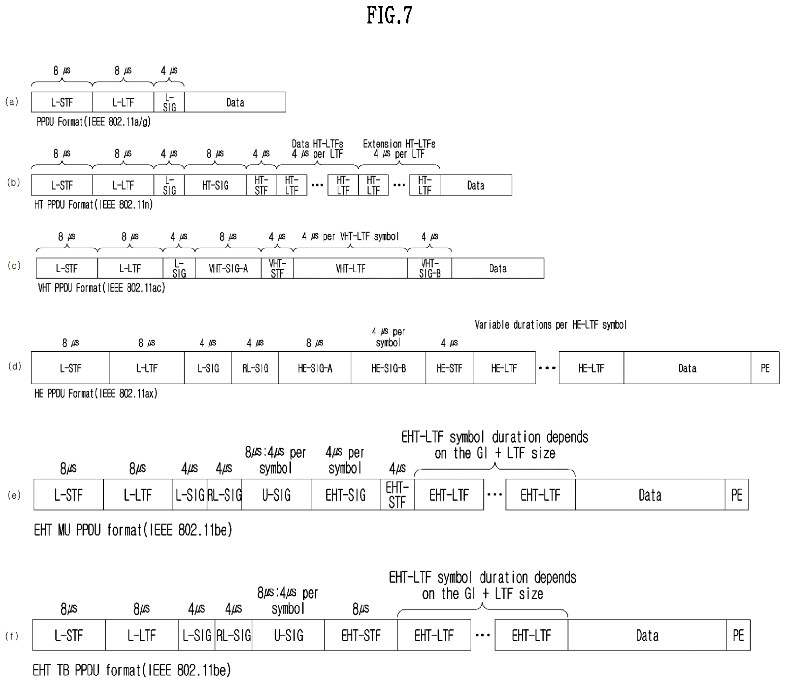

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.1 1ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Trigger frame

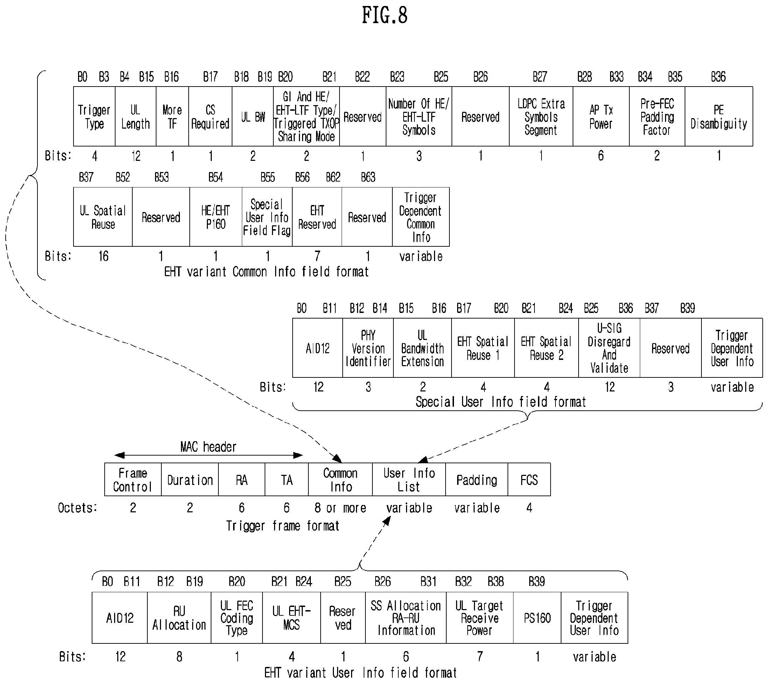

FIG.8 is a diagram illustrating an exemplary format of a trigger frame to which the present disclosure may be applied.

The trigger frame may allocate resources for transmission of one or more TB PPDUs and request transmission of TB PPDUs. The trigger frame may also include other information required by an STA transmitting a TB PPDU in response thereto. The trigger frame may include common information and a user information list field in the frame body.

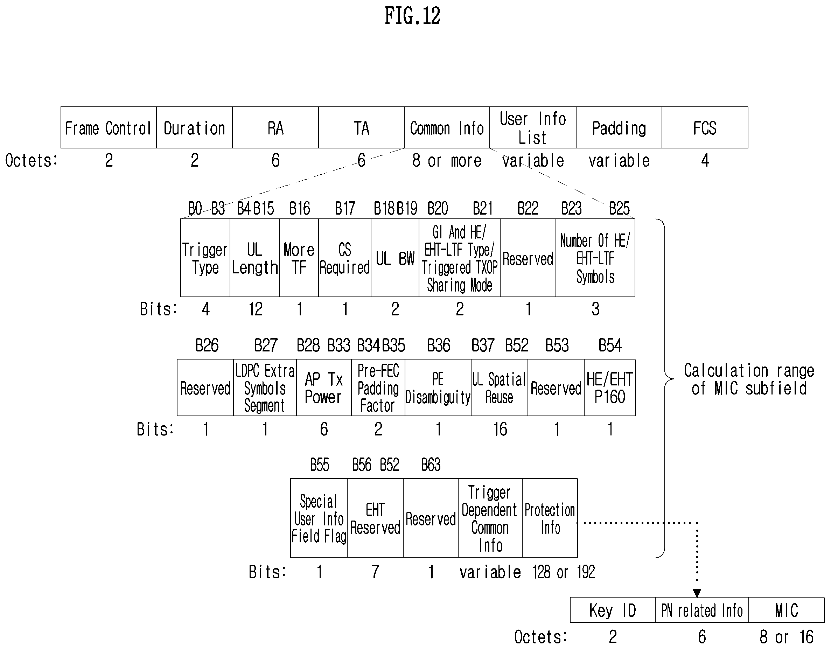

The common information field may include information that is common to one or more TB PPDU transmissions requested by a trigger frame, such as trigger type, UL length, presence of a subsequent trigger frame (e.g., More TF), whether CS (channel sensing) is required, UL BW (bandwidth), etc. Fig. 12 illustrates an example of an EHT variant common information field format.

A trigger type subfield of a 4-bit size may have a value of 0-15. Among them, 0, 1, 2, 3, 4, 5, 6 and 7, values of a trigger type subfield, are defined as corresponding to basic, BFRP (Beamforming Report Poll), MU-BAR (multi user-block acknowledgement request), MU-RTS (multi user-request to send), BSRP (Buffer Status Report Poll), GCR (groupcast with retries) MU-BAR, BQRP (Bandwidth Query Report Poll), and NFRP (NDP Feedback Report Poll), respectively, and values of 8-15 are defined as being reserved.

Among the common information, a trigger dependent common information subfield may include information that is selectively included based on a trigger type.

A special user info field may be included within the trigger frame. The special user info field does not contain user-specific information, but rather includes extended common information not provided in the common information field.

A user information list includes at least 0 user information field. FIG. 12 illustratively shows an EHT variant user information field format.

An AID12 subfield basically represents that it is a user information field for a STA having a corresponding AID. In addition, when an AID12 field has a predetermined specific value, it may be utilized for other purposes such as allocating a random access (RA)-RU or being configured in the form of a special user information field. A special user information field is a user information field that does not include user-specific information but includes extended common information not provided in a common information field. For example, a special user information field may be identified by an AID12 value of 2007, and a special user information field flag subfield within a common information field may represent whether a special user information field is included.

A RU allocation subfield may represent the size and location of a RU/a MRU. For this purpose, a RU allocation subfield may be interpreted together with the PS160 (primary/secondary 160MHz) subfield of a user information field, the UL BW subfield of a common information field, etc.

For example, as shown in Table 1 below, the mapping of B7-B1 of a RU allocation subfield may be defined together with the settings of the B0 and PS160 subfields of a RU allocation subfield. Table 1 shows an example of encoding the PS160 subfield and the RU allocation subfield of an EHT variant user information field.

**[Table 1]**

| **PS160 subfield** | **B0 of the RU Allocation subfield** | **B7-B1 of the RU Allocation subfield** | **Bandwidth (MHz)** | **RU/MRU size** | **RU/MRU index** | **PHY RU/ MRU index** |
|---|---|---|---|---|---|---|
| 0-3: 80 MHz segment where the RU is located | | 0-8 | 20, 40, 80, 160, or 320 | 26 | RU1 to RU9, respectively | 37×*N*+RU index |
| | | 9-17 | 40, 80, 160, or 320 | | RU10 to RU18, respectively | |
| | | 18 | 80, 160, or 320 | | Reserved | |
| | | 19-36 | 80, 160, or 320 | | RU20 to RU37 respectively | |
| | | 37-40 | 20, 40, 80. 160, or 320 | 52 | RU1 to RU4, respectively | 16×*N*+RU index |
| | | 41-44 | 40, 80, 160, or 320 | | RU5 to RU8, respectively | |
| | | 45-52 | 80, 160, or 320 | | RU9 to RU16, respectively | |
| | | 53, 54 | 20, 40, 80, 160, or 320 | 106 | RU1 and RU2, respectively | 8×*N*+RU index |
| | | 55, 56 | 40, 80, 160, or 320 | | RU3 and RU4, respectively | |
| | | 57-60 | 80, 160, or 320 | | RU5 to RU8, respectively | |
| | | 61 | 20, 40, 80. 160, or 320 | 242 | RU1 | 4×*N*+RU index |
| | | 62 | 40, 80, 160, or 320 | | RU2 | |
| | | 63, 64 | 80, 160, or 320 | | RU3 and RU4, respectively | |
| | | 65 | 40, 80, 160, or 320 | 484 | RU1 | 2×*N*+RU index |
| | | 66 | 80, 160, or 320 | | RU2 | |
| | | 67 | 80, 160, or 320 | 996 | RU1 | *N+*RU index |
| 0-1: 160 MHz segment where the RU is located | 0 | 68 | Reserved | | | Reserved |
| | 1 | | 160 or 320 | 2x996 | RU1 | X1+RU index |
| 0 | 0 | 69 | Reserved | | | Reserved |
| 0 | 1 | | | | | |
| 1 | 0 | | | | | |
| 1 | 1 | | 320 | 4×996 | RU1 | RU1 |
| 0-3, 80 MHz segment RU is located where the | | 70-72 | 20, 40, 80, 160, or 320 | 52+26 | MRU1 to MRU3, respectively | 12x*N*+ MRU index |
| | | 73-75 | 40, 80, 160, or 320 | 52+26 | MRU4 to MRU6, respectively | |
| | | 76-81 | 80, 160, or 320 | 52+26 | MRU7 to MRU12, respectively | |
| | | 82, 83 | 20, 40, 80, 160, or 320 | 106+26 | MRU1 and MRU2, respectively | 8×*N*+ MRU index |
| | | 84, 85 | 40, 80, 160. or 320 | 106+26 | MRU3 and NIRU4, respectively | |
| | | 86-89 | 80, 160, or 320 | 106+26 | MRU5 to MRU8, respectively | |
| | | 90-93 | 80, 160, or 320 | 484+242 | MRU1 to MRU4, respectively | 4×*N*+ MRU index |
| 0-1: 160 MHz segment where the MRU is located | 0 | 94, 95 | 160 or 320 | 996+484 | MRU1 and MRU2, respectively | 4×X1 + MRU index |
| | 1 | | | | MRU3 and MRU4, respectively | |
| 0-1: 160 MHz segment where the MRU is located | 0 | 96-99 | 160 or 320 | 996+484+ 242 | MRU1 to MRU4, respectively | 8×X1 + MRU index |
| | 1 | | | | MRU5 to MRU8, respectively | |
| 0 | 0 | 100-103 | 320 | 2×996 +484 | MRU1 to MRU4, respectively | MRU index |
| 0 | 1 | | | | MRU5 and MRU6, respectively | |
| 1 | 0 | | | | MRU7 and MRU8, respectively | |
| 1 | 1 | | | | MRU9 to MRU12, respectively | |
| 0 | 0 | 104 | 320 | 3×996 | MRU1 | MRU index |
| 0 | 1 | | | | MRU2 | |
| 1 | 0 | | | | MRU3 | |
| 1 | 1 | | | | MRU4 | |
| 0 | 0 | 105, 106 | 320 | 3x996 1484 | MRU1 and MRU2, respectively | MRU index |
| 0 | 1 | | | | MRU3 and MRU4, respectively | |
| 1 | 0 | | | | MRU5 and MRU6, respectively | |
| 1 | 1 | | | | MRU7 and MRU8, respectively | |
| Any | Any | 107-127 | Any | Reserved | Reserved | Reserved |

When B0 of a RU allocation subfield is set as 0, it may represent that RU/MRU allocation is applied to a primary 80MHz channel, and when its value is set as 1, it may represent that RU allocation is applied to the secondary 80MHz channel of primary 160MHz. When B0 of a RU allocation subfield is set as 0, it may represent that RU/MRU allocation is applied to the lower 80MHz of secondary 160MHz, and when its value is set as 1, it may represent that RU allocation is applied to the upper 80MHz of secondary 160MHz.

In the trigger frame RU allocation table of Table 1, parameter N may be calculated based on the formula of N=2 *X1+X0. For a bandwidth less than or equal to 80MHz, values of PS160, B0, X0 and X1 may be set as 0. For a 160MHz bandwidth and a 320MHz bandwidth, values of PS160, B0, X0 and X1 may be set as shown in Table 2. This configuration represents the absolute frequency order for primary and secondary 80MHz and 160MHz channels. The order from left to right represents the order from low frequency to high frequency. A primary 80MHz channel is indicated as P80, a secondary 80MHz channel is indicated as S80, and a secondary 160MHz channel is indicated as S160.

**[Table 2]**

| **Bandwidth (MHz)** | **Inputs** | | | **Outputs** | | |
|---|---|---|---|---|---|---|
| | **Configuration** | **PS160** | **B0** | **X0** | **X1** | **N** |
| 20/40/80 | [P80] | 0 | 0 | 0 | 0 | 0 |
| 160 | [P80 S80] | 0 | 0 | 0 | 0 | 0 |
| | | 0 | 1 | I | 0 | 1 |
| | [S80 P80] | 0 | 0 | 1 | 0 | 1 |
| | | 0 | 1 | 0 | 0 | 0 |
| 320 | [P80 S80 S160] | 0 | 0 | 0 | 0 | 0 |
| | | 0 | 1 | 1 | 0 | 1 |
| | | 1 | 0 | 0 | 1 | 2 |
| | | 1 | I | 1 | 1 | 3 |
| | [S80 P80 S160] | 0 | 0 | 1 | 0 | 1 |
| | | 0 | 1 | 0 | 0 | 0 |
| | | 1 | 0 | 0 | 1 | 2 |
| | | 1 | I | 1 | 1 | 3 |
| | [S160 P80 S80] | 0 | 0 | 0 | 1 | 2 |
| | | 0 | 1 | 1 | 1 | 3 |
| | | 1 | 0 | 0 | 0 | 0 |
| | | 1 | 1 | 1 | 0 | 1 |
| | [S160 S80 P80] | 0 | 0 | 1 | 1 | 3 |
| | | 0 | 1 | 0 | 1 | 2 |
| | | 1 | 0 | 0 | 0 | 0 |
| | | 1 | 1 | 1 | 0 | 1 |

### BIP(Broadcast/Multicast Integrity Protocol)

BIP provides data integrity and replay protection for group addressed robust management frames after establishment of an Integrity Group Temporal Key Security Association (IGTKSA) and for beacon frames after establishment of a Beacon Integrity Group Temporal Key Security Association (BIGTKSA). In addition, BIP provides integrity and replay protection for individually addressed and group addressed Wake Up Radio (WUR) frames.

In this regard, BIP-CMAC-128 may provide data integrity and replay protection by using AES-128 in CMAC mode with a 128-bit integrity key and a CMAC TLen value of 128 (16 octets). In addition, BIP-CMAC-256 may provide data integrity and replay protection by using AES-256 in CMAC mode with a 256-bit integrity key and a CMAC TLen value of 128 (16 octets).

BIP may calculate a management MPDU (MMPDU) message integrity code (MIC) by using an Integrity Group Temporal Key (IGTK) or a Beacon Integrity Group Temporal Key (BIGTK). In addition, BIP may calculate a MIC to protect an individually addressed WUR wake-up frame by using a WUR Temporal Key (WTK). In addition, BIP may calculate a MIC to protect a broadcast or group addressed WUR wake-up frame by using a WIGTK (WUR Integrity Group Temporal Key).

When management frame protection is negotiated, an authenticator shall distribute a new IGTK and an IGTK packet number (IGTK PN, IPN) each time a new Group Temporal Key (GTK) is distributed. Herein, the IGTK may be identified by a MAC address of a transmitting STA and an IGTK key ID encoded in a Key ID field within a Management MIC element (MME). In addition, when beacon protection is enabled, the authenticator may distribute one new BIGTK and a BIGTK packet number (BIPN) when distributing a new GTK. Herein, the BIGTK may be identified by the MAC address of the transmitting STA and a BIGTK key ID encoded in the Key ID field within the MME. In addition, when WUR frame protection is negotiated, the authenticator may distribute one new WIGTK and a WIGTK packet number (WIPN) when distributing a new GTK. Herein, the WIGTK may be identified by the MAC address of the transmitting STA and a WIGTK key ID encoded in the Key ID field within the MME.

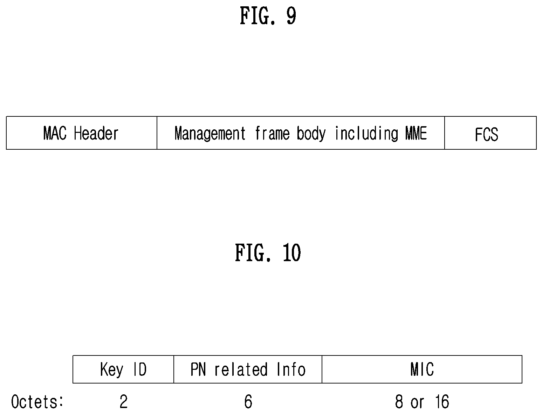

FIG. 9 illustrates an example of a BIP MMPDU format that may be applied to the present disclosure.

Referring to FIG. 9, BIP encapsulation, that is, a BIP MMPDU format, may include a MAC header (e.g., an IEEE 802.11 header), a management frame body including an Management MIC element (MME), and an FCS.

In this regard, the MME format may include element ID information, length information, Key ID information, PN information (e.g., IPN, BIPN, WIPN, etc.), and MIC information.

Additionally, additional authentication data (AAD) used for a BIP-based integrity check (e.g., BIP AAD) may be constructed from a MAC header. For example, the AAD may be composed of an MPDU frame control field and address information. As a specific example, a 20-octet BIP AAD may include a 2-octet MPDU frame control field, a 6-octet MPDU Address 1 field, a 6-octet MPDU Address 2 field, and a 6-octet MPDU Address 3 field.

### A method of supporting a BIP-based integrity check for a control frame

In a conventional wireless LAN system, for individually addressed data frames (e.g., unicast-based data frames) and management frame(s), encryption/decryption based on Temporal Key Integrity Protocol (TKIP), CTR with CBC-MAC protocol (CCMP), or GCM Protocol (GCMP) may be performed/applied by using a pairwise transient key (PTK). In addition, for group addressed frames (e.g., broadcast-based data frames), encryption/decryption based on TKIP/CCMP/GCMP may be performed/applied by using a group temporal key (GTK). That is, CCMP/GCMP are security protocols that perform encryption/decryption, in which a TK based on a PTK may be used in a single-user (SU) case, and a TK based on a GTK may be used in a multi-user (MU) case. CCMP/GCMP may ensure confidentiality and integrity for data frames and management frame(s).

In addition, for group addressed management frame(s), a BIP-based integrity check may be performed by using an integrity group temporal key (IGTK). In particular, in the case of a beacon frame, a BIP-based integrity check may be performed by using a beacon integrity group temporal key (BIGTK). In the case of BIP, a TK based on an IGTK/BIGTK is used to generate a message integrity code (MIC) for a frame body of the corresponding data frame, and an integrity check based thereon may be performed. That is, BIP, unlike CCMP/GCMP, may ensure only integrity for data frames and management frame(s).

The method of constructing an MPDU based on CCMP and GCMP and the method of constructing a management MPDU (MMPDU) based on BIP have the following differences.

First, in the case of CCMP/GCMP, a transmitting STA performs encryption on a data portion by using CCM/GCM, transmits encrypted data, and a receiving STA may decrypt the received encrypted data. In contrast, in the case of BIP, a transmitting STA does not perform encryption on the data portion and may perform the corresponding protocol to generate a MIC for an integrity check of data in a frame body.

Next, in the case of CCMP/GCMP, an MPDU may be constructed and transmitted/received in an order of a MAC header, a CCMP/GCMP header, encrypted data, a MIC (an encrypted MIC in the case of CCMP), and an FCS. In contrast, in the case of BIP, the MPDU may be constructed and transmitted/received in an order of a MAC header, a management frame body including an MME (management MIC element), and an FCS. Herein, since the MME substitutes for a role of the CCMP/GCMP header, the MME may include information of a Key ID field, an IPN/BIPN, and a MIC.

As described above, protection is supported for data frames and management frames including beacon frames among group addressed frames. However, protection is not supported for control frames, and accordingly, control frames are transmitted and received in a state in which no protocol for encryption/decryption and/or integrity check is applied.

Among control frames, a trigger frame corresponds to a frame including information for allocating a specific RU and a specific bandwidth, etc., for data transmission and reception to and from a plurality of STAs. If information included in the trigger frame is exposed to a third STA (e.g., an attacking STA), data transmission and reception capability between a transmitting STA and a receiving STA may be degraded, or waste of power and/or medium may occur due thereto.

In consideration of the above, the present disclosure proposes a security technique for securing integrity of a trigger frame transmitted and received between a transmitting STA and a receiving STA.

Values/names proposed in the present disclosure may be changed, and the scope of the present disclosure is not limited thereto. In addition, the STA in the present disclosure may include a non-AP STA and an AP STA.

Additionally, although the present disclosure is described by taking, as a representative example, a security technique for a trigger frame among control frames, the proposed method of the present disclosure may be extended and applied to other types of control frames in addition to the trigger frame.

In the present disclosure, performing an integrity check on a trigger frame may be interpreted as applying an extension of BIP to the trigger frame. In this regard, with respect to an existing BIP definition, additional matters for control frames may be defined, or a separate protocol based on BIP for integrity checking of control frames may be newly defined.

Hereinafter, methods for supporting/performing an integrity check on a trigger frame will be described through specific examples.

### Embodiment 1

The present embodiment relates to a method for configuring a trigger frame to support an integrity check.

Specifically, in order to apply BIP to a trigger frame, the present disclosure proposes a configuration in which protection-related information is included within the trigger frame in a subordinate form, instead of a method of including a management MIC element (MME) at the end of a frame body when applying BIP to a management frame.

FIG. 10 illustrates an example of a protection information field/subfield format according to an embodiment of the present disclosure.

Referring to FIG. 10, a protection information (sub)field format including information required for an integrity check may include Key ID information, PN-related information (e.g., IPN/BIPN information), and MIC information.

The protection information (sub)field format may be included in a trigger frame in a form of a protection information subfield.

The length of each piece of information included in the corresponding format is not limited to that illustrated in FIG. 10. For example, a Key ID field may have a length of 2 octets in the case of a Key ID indicating an IGTK or a BIGTK, but may have a length of 2 bits in the case of a Key ID indicating a GTK. In addition, the MIC field may have a length of 8 octets, 16 octets, 64 octets, or the like. Additionally, the length may be changed by additionally applying a MIC value to a separate function.

In this regard, if a key is not required to be used for MIC generation, Key ID information may not be included in the corresponding protection information (sub)field.

Additionally or alternatively, although the present disclosure is described by exemplifying that the corresponding information is additionally configured in a trigger frame by using a protection information (sub)field format as illustrated in FIG. 10, the present disclosure is not limited thereto. That is, the Key ID, PN-related information, and/or MIC may be included in a control frame to which security is applied in a separated/distributed manner.

For example, in the trigger frame configuration in Embodiment 1-1, Embodiment 1-3, and Embodiment 1-4 described later, a subfield corresponding to the Key ID may be located at a position preceding the corresponding protection information (sub)field (e.g., within a Common Info field or a Special User Info field in the trigger frame).

In the description of the present disclosure, it is assumed that receiving STAs that receive a trigger frame according to the method proposed in Embodiment 1-1 to Embodiment 1-3 of the present disclosure, transmitted by an AP that is a transmitting STA, are all UHR STAs (and/or beyond UHR STAs). That is, when a trigger frame configured according to the proposed method of the present disclosure is received by a pre-UHR STA (e.g., an EHT STA or an HE STA), an error may occur during decoding of the corresponding trigger frame. In contrast, receiving STAs that receive a trigger frame according to the method proposed in Embodiment 1-4 may include a pre-UHR STA (e.g., a legacy STA or an EHT STA) and a UHR STA (e.g., a non-legacy STA). In this regard, a pre-UHR STA may refer to an STA that does not support protection for a trigger frame, and a UHR STA may refer to an STA that supports protection for a trigger frame.

A trigger frame for integrity checking may be configured based on one or more of the formats described below.

### Embodiment 1-1

A protection information (sub)field according to the present disclosure may be located within a user information field included in a trigger frame.

That is, by applying BIP to each user information field included in a user info list field within the trigger frame, a protection information (sub)field may be included at a last portion of the corresponding field.

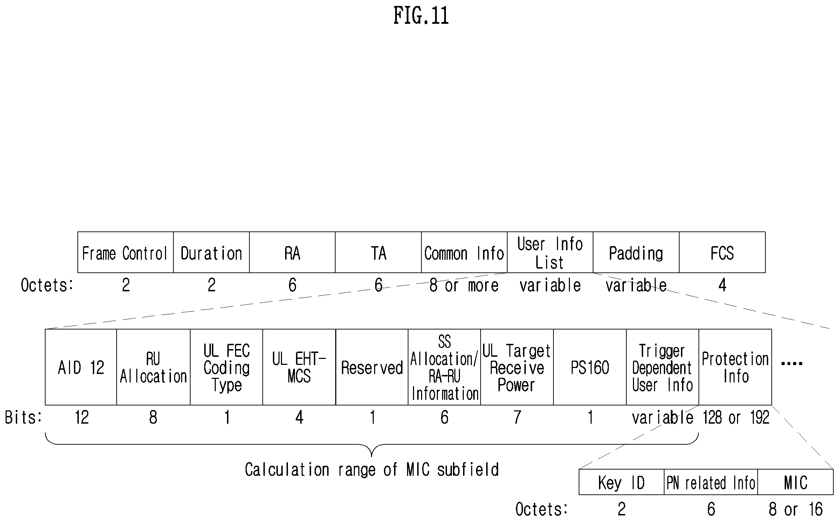

FIG. 11 illustrates an example of a trigger frame configuration supporting an integrity check according to an embodiment of the present disclosure.

Referring to FIG. 11, the protection information (sub)field described with reference to FIG. 10 may be located at a last portion within each user information field.

For example, in the case of a user information field for a UHR STA, a transmitting STA may apply BIP to each user information field (or at least one of the user information fields) and transmit a trigger frame by adding a protection information (sub)field at the end of the corresponding field. Based thereon, a receiving STA that has received the corresponding trigger frame may perform an integrity check on a specific user information field transmitted to itself.

In this regard, MIC information included in the corresponding protection information (sub)field, that is, a MIC subfield, may have a calculation scope corresponding to the user information field in which the protection information (sub)field is included. That is, a target to which an integrity check is performed/applied based on the protection information (sub)field may correspond to the user information field to which the corresponding (sub)field belongs.

### Embodiment 1-2

A protection information (sub)field according to the present disclosure may be located within a common information field included in a trigger frame.

That is, by applying BIP to a common information field within the trigger frame, a protection information (sub)field may be included at a last portion of the corresponding field.

FIG. 12 illustrates another example of a trigger frame configuration supporting an integrity check according to an embodiment of the present disclosure.

Referring to FIG. 12, the protection information (sub)field described with reference to FIG. 10 may be located at a last portion within the common information field.

In this case, a transmitting STA may apply BIP to the common information field and transmit a trigger frame by adding a protection information (sub)field at the end of the corresponding field. Based thereon, a receiving STA that has received the corresponding trigger frame may perform an integrity check on the common information field within the trigger frame based on the corresponding information.

In this regard, MIC information included in the corresponding protection information (sub)field, that is, a MIC subfield, may have a calculation scope corresponding to the common information field in which the protection information (sub)field is included. That is, a target to which an integrity check is performed/applied based on the protection information (sub)field may correspond to the common information field to which the corresponding (sub)field belongs.

### Embodiment 1-3

A protection information (sub)field according to the present disclosure may be located in a portion of a trigger frame other than a common information field and a user information field.

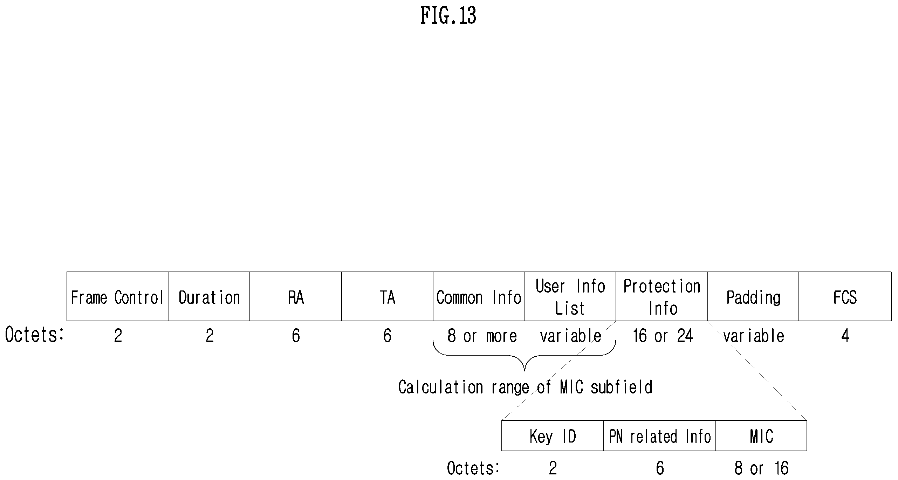

FIG. 13 illustrates still another example of a trigger frame configuration supporting an integrity check according to an embodiment of the present disclosure.

Referring to FIG. 13, a protection information field may be located before an FCS within the trigger frame.

In this case, a transmitting STA may apply BIP to a common information field and a user information list field (i.e., all user information fields), and may add a protection information (sub)field at a last portion to set values of respective subfields.

In this regard, the MIC information may be set by deriving a MIC value for both the common information field and the user information list field.

A transmitting STA may configure a trigger frame as shown in FIG. 13 and transmit the same to UHR STA(s).

### Embodiment 1-4

The protection information (sub)field according to the present disclosure may be divided/distributed and positioned in multiple user information fields within the user information list field included in the trigger frame.

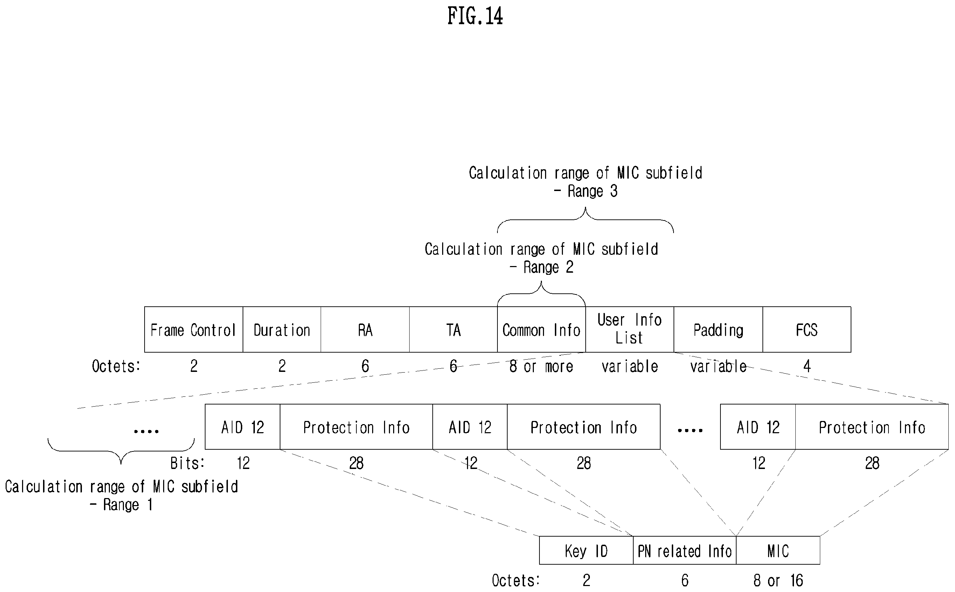

FIG. 14 illustrates still another example of a trigger frame configuration supporting an integrity check according to an embodiment of the present disclosure.

Referring to FIG. 14, a transmitting STA may configure a trigger frame by including protection information (i.e., a Key ID, PN-related information (e.g., IPN/BIPN), and information related to an MIC) in a plurality of User Info fields.

In this regard, values of AID fields (e.g., an AID12 field) of the User Info fields including the Key ID, the PN-related information, and the information related to the MIC may have the same value. Here, the AID field may have a specific value that does not overlap with values of AID fields of User Info field(s) for a pre-UHR STA and UHR STA(s) included in a User Info List field in the corresponding trigger frame.

In this case, the UHR STA(s) may recognize in advance an AID value of the User Info fields including the protection information. Based thereon, the UHR STA(s) may decode the Key ID, the PN-related information, and the information related to the MIC by concatenating values of the corresponding User Info fields.

The User Info fields including the protection information may be positioned at the end of the User Info List field and, at the same time, positioned before padding. For example, a UHR STA may sequentially concatenate, from 28 bits excluding an AID field in a first User Info field in which an AID value indicating inclusion of the protection information is set/included, to 28 bits excluding an AID field in a User Info field positioned before a padding field, and through this, the UHR STA may complete the Key ID, the PN-related information, and the information related to the MIC.

In FIG. 14, it is illustrated that the Key ID is 2 octets, the PN-related information (e.g., IPN/BIPN) is 6 octets, and the MIC is 8 octets or 16 octets; however, the scope of the present disclosure is not limited thereto.

For example, when the MIC is 8 octets, a UHR STA may include the Key ID, the PN-related information, and the information related to the MIC, by 28 bits each, after an AID 12 subfield in a User Info field. Based thereon, the Key ID, the PN-related information, and the information related to the MIC may be included (divided/distributed/over) in a total of five User Info fields. As another example, when the MIC is 16 octets, a UHR STA may include the Key ID, the PN-related information, and the information related to the MIC, by 28 bits each, after the AID 12 subfield in the User Info field. Based thereon, the Key ID, the PN-related information, and the information related to the MIC may be included (divided/distributed/over) in a total of seven User Info fields.

When a padding field is not included in the trigger frame, the UHR STA may infer a length of the MIC based on the Key ID information, and based thereon, may concatenate 28-bit portions in the User Info fields up to a position before an FCS field.

The format proposed in the present embodiment, unlike Embodiment 1-1 to Embodiment 1-3 described above, may be utilized even when, in a User Info List field in a trigger frame, not only User Info field(s) for UHR STA(s) but also User Info field(s) for pre-UHR STA(s) are configured together. That is, the UHR STA(s) may recognize User Info field(s) including protection information based on a value of an AID 12 subfield. On the other hand, since a value of the AID 12 subfield is different from a value of its own AID 12, the pre-UHR STA(s) may ignore the corresponding User Info field.

In the trigger frame configured in the format proposed in the present embodiment, an MIC value may be derived/calculated by applying BIP to a Common Info field and/or User Info field(s) based on three methods, and integrity check may be performed based on at least one method.

For example, as illustrated in FIG. 14, an MIC calculation method based on User Info field(s) in a User Info List field (i.e., Range 1), an MIC calculation method based on a Common Info field (o/e/, Range 2), or an MIC calculation method based on the Common Info field and the User Info field(s) in the User Info List field (i.e., Range 3) may be considered.

Specifically, the MIC calculation method of Range 1 may refer to a method of deriving an MIC for User Info field(s) included in the User Info List field in the trigger frame. In this case, the corresponding User Info field(s) in the User Info List field may refer to User Info field(s) including information transmitted by a transmitting STA to receiving STAs, and User Info field(s) including the above-described protection information are excluded. In addition, the MIC calculation method of Range 2 may refer to a method of deriving an MIC for the Common Info field in the trigger frame. Further, the MIC calculation method of Range 3 may refer to a method of deriving an MIC for the Common Info field in the trigger frame and User Info field(s) including AID values of receiving STAs in the User Info List field, including both cases of Embodiment 1-1 and Embodiment 1-2.

With respect to a trigger frame supporting an integrity check according to the present disclosure, a transmitting STA and receiving STA(s) may share information on whether BIP for the trigger frame is supported. Such information may be shared through a specific element (e.g., a Extended RSN element (RSNXE)) in a discovery process (e.g., a beacon frame, a probe response frame, etc.) and/or an (re)association process (e.g., an (re)association request frame, an (re)association response frame, etc.).

In this regard, by using reserved bits within an existing element (e.g., an RSNXE) or by defining a new (sub)field within a new element, whether BIP application to a trigger frame is supported may be shared. For example, a 1-bit protected trigger support (sub)field may be newly defined, where a value of 1 may mean/indicate that application of BIP to a trigger frame is supported, and a value of 0 may mean/indicate that application of BIP to a trigger frame is not supported.

If both a transmitting STA and a receiving STA support BIP and support application of BIP to a trigger frame, the two STAs may perform application of BIP to the trigger frame. In contrast, if the transmitting STA and the receiving STA support BIP but do not support application of BIP to a trigger frame, the two STAs may not perform application of BIP to the trigger frame. Additionally, when a trigger frame is applied to BIP, a management frame cipher suite (e.g., BIP-GMAC-128, BIP-GMAC-256, BIP-CMAC-128, or BIP-CMAC-256, etc.) negotiated upon by the transmitting STA and the receiving STA during a negotiation process may be used in the same manner. Alternatively, in order to apply a trigger frame to BIP, the transmitting STA and the receiving STA may negotiate an additional/separate cipher suite for the corresponding trigger frame.

For example, when a trigger frame is configured in the format proposed in Embodiment 1-1, Embodiment 1-2, and/or Embodiment 1-3 of the present disclosure, this may be allowed only when a transmitting STA of the corresponding trigger frame and all receiving STAs support application of BIP to the trigger frame. That is, for the corresponding transmitting STA and all receiving STAs, a value of a Protected Trigger Support (sub)field is set to a value indicating support for application of BIP to the trigger frame.

For example, when a trigger frame is configured in the format proposed in Embodiment 1-4 of the present disclosure, this may be allowed even when a transmitting STA of the corresponding trigger frame supports application of BIP to the trigger frame, but only some receiving STA(s) support application of BIP to the trigger frame. That is, in the case of the corresponding transmitting STA, a value of a Protected Trigger Support (sub)field is set to a value indicating support for application of BIP to the trigger frame. In contrast, in the case of the receiving STA(s), a value of the Protected Trigger Support (sub)field may be set not only to a value indicating support for application of BIP to the trigger frame, but also to a value indicating non-support.

Additionally or alternatively, information on whether application of BIP to a trigger frame is supported and which one of the formats proposed in the present disclosure (e.g., the formats illustrated in FIGS. 11 to 14) is used to configure a protection information (sub)field may be shared between the transmitting STA and the receiving STA. In this regard, for sharing the corresponding information, reserved bits within an existing element (e.g., an RSNXE), reserved bits within a UHR variant common information field, and/or reserved bits within a special user information field may be used, or a new (sub)field within a new element (e.g., a protected trigger mode (sub)field) may be defined. The corresponding (sub)field may be included in a beacon frame by a transmitting STA or included in a data frame by a receiving STA not only during an (re)association process but also during a data transmission and reception process.

For example, when a value of a Protected Trigger Mode (sub)field is set to 0, this may mean/indicate that BIP is not applied to the corresponding trigger frame. In contrast, when the value of the Protected Trigger Mode (sub)field is set to 1 or more, this may mean/indicate that the trigger frame is configured according to at least one of the above-described methods (e.g., Embodiment 1-1 to Embodiment 1-4), and that BIP is applied to the trigger frame.

As a specific example, when the corresponding protected trigger mode (sub)field is set to a value of 1 or more, the value of the protected trigger mode (sub)field may be defined as shown in Table 3 below. Table 3 is illustrative, and at least one of the values described in Table 3 may be applied/defined, and specific values may be set/defined differently from the illustrated examples.

**[Table 3]**

| Value of protected trigger mode (sub)field | Meaning |
|---|---|
| 0 | BIP is not applied to the trigger frame |
| 1 | Trigger frame configuration based on Embodiment 1-1 |
| 2 | Trigger frame configuration based on Embodiment 1-2 |
| 3 | Trigger frame configuration based on Embodiments 1-1 and 1-2 |
| 4 | Trigger frame configuration based on Embodiment 1-3 |
| 5 | Trigger frame configuration based on Embodiment 1-4 |
| 6 | Trigger frame configuration based on Embodiment 1-4, and integrity verification is performed based on an MIC calculated for a Common Info field and User Info field(s) (for example, Range 3 of FIG. 14) |
| 7 | Trigger frame configuration based on Embodiment 1-4, and integrity verification is performed based on an MIC calculated for a Common Info field (for example, Range 2 of FIG. 14) |
| 8 | Trigger frame configuration based on Embodiment 1-4, and integrity verification is performed based on an MIC calculated for User Info field(s) (for example, Range 1 of FIG. 14) |

Referring to Table 3, through the protected trigger mode (sub)field, a configuration/format of a trigger frame including a protection information (sub)field according to the present disclosure, together with a method of calculating a MIC value, may be indicated.

However, the scope of the present disclosure is not limited thereto, and a configuration/format of a trigger frame including a protection information (sub)field according to the present disclosure may be indicated through a Protected Trigger Mode (sub)field, and a method of calculating an MIC value may be separately indicated through another (sub)field.

For example, a receiving STA may recognize/identify a position at which a protection information (sub)field is included in a received trigger frame through the Protected Trigger Mode (sub)field. Based thereon, the receiving STA may calculate an MIC value by using a value indicated by an MIC calculation range (sub)field, and may perform integrity check on the trigger frame based thereon.

### Embodiment 2

The present embodiment relates to a method for generating a MIC for BIP transmission/reception in connection with the above-described application of BIP to a trigger frame.

In the case of a trigger frame, a type of the trigger frame transmitted and received may be indicated according to a value of a trigger type subfield within a common information field. According to the indicated value, a receiving STA may determine whether the corresponding trigger frame is an individually addressed frame or a group addressed frame.

In this regard, when BIP is applied to a trigger frame, a key used for setting a MIC value may be used differently depending on whether the frame is an individually addressed frame or a group addressed frame.

For example, in the case of an individually addressed data frame, MIC value calculation may be performed by using a TK based on a PTK that is identically generated between a transmitting STA and a receiving STA. On the other hand, in the case of a group addressed data frame, MIC value calculation may be performed by using a TK based on a GTK shared by the transmitting STA with the receiving STA.

In the case of a conventional BIP (e.g., BIP applied to data frames/management frames), BIP usage based on an IGTK or a BIGTK is possible. In contrast, in the present disclosure, it is assumed that BIP usage based on a PTK/GTK is possible.

Hereinafter, key usage methods for calculating and checking a MIC value for an individually addressed trigger frame and/or a group addressed trigger frame will be described in detail.

First, in the case of an individually addressed trigger frame, a MIC value may be calculated/checked as follows.

A transmitting STA and a receiving STA may calculate a MIC value by using a TK based on a PTK that is identically generated during a 4-way handshake process. For example, with respect to application of BIP to a trigger frame, the transmitting STA and the receiving STA may identically use a PTK generated for protection of a data frame during the 4-way handshake process, or may use a (new) PTK that is identically generated/negotiated/shared between them for protection of the corresponding trigger frame during the 4-way handshake process.

Alternatively, a transmitting STA and a receiving STA may calculate a MIC value by using a TK based on a new PTK for an individually addressed trigger frame that is shared during a 4-way handshake process. In this regard, the corresponding new PTK may be referred to as a Trigger PTK (TPTK), and the transmitting STA may generate and share a different TPTK for each receiving STA. That is, different TPTKs may be shared for receiving STA 1 and receiving STA 2. In addition, between the transmitting STA and the receiving STA, information on the TPTK and information related to a cipher suite that may use the corresponding TPTK may be shared through a new key data element (KDE) for the TPTK (for example, a TPTK KDE).

If a receiving STA recognizes/confirms a key for protecting a trigger frame (e.g., a TPTK) (and/or receives the corresponding key from the transmitting STA), the receiving STA may perform a MIC check on the trigger frame based on the corresponding key. Otherwise, the receiving STA may perform a MIC check on the trigger frame based on a key (e.g., a PTK) previously shared with the transmitting STA.

Next, in the case of a group addressed trigger frame, a MIC value may be calculated/checked as follows.

A transmitting STA may generate an IGTK or a BIGTK during a 4-way handshake process and share the same with a receiving STA, and the transmitting STA and the receiving STA may calculate a MIC value by using a TK based on the corresponding IGTK or the corresponding BIGTK.

Alternatively, a transmitting STA may generate a GTK during a 4-way handshake process and share the same with a receiving STA, and the transmitting STA and the receiving STA may calculate a MIC value by using a TK based on the corresponding GTK.

Alternatively, a transmitting STA may generate a new GTK for a group addressed trigger frame during a 4-way handshake process and share the same with a receiving STA, and the transmitting STA and the receiving STA may calculate a MIC value by using a TK based on the corresponding new GTK. Herein, the new GTK may be referred to as a trigger broadcast GTK (TBGTK), and the transmitting STA may share the same value of the TBGTK with receiving STAs. That is, an AP may generate and share the same TBGTK with STAs associated with the AP. In addition, between the transmitting STA and the receiving STA, information on the TBGTK and information related to a cipher suite that may use the corresponding TBGTK may be shared through a new KDE for the TBGTK (for example, a TBGTK KDE).

If a receiving STA receives, from a transmitting STA, a key for protecting a trigger frame (e.g., a TBGTK), the receiving STA may perform a MIC check on the trigger frame based on the corresponding key. Otherwise, the receiving STA may perform a MIC check on the trigger frame based on a key (e.g., an IGTK or a BIGTK) previously shared with the transmitting STA.

### Embodiment 3

The present embodiment relates to a specific method for performing protection on a trigger frame based on the trigger frame configuration proposed in the present disclosure.

First, when a trigger frame is a group addressed trigger frame, the trigger frame configuration proposed in the present disclosure may be used as in the following examples.

For example, in the case of the trigger frame configuration described in Embodiment 1-2 (e.g., see FIG. 12), a transmitting STA and/or a receiving STA may derive a MIC value through BIP for a common information field by using the above-described GTK, IGTK, BIGTK, or TBGTK. Additionally, in the case of the trigger frame configuration described in Embodiment 1-1 (e.g., see FIG. 11), a transmitting STA and/or a receiving STA may derive a MIC value through BIP for each user information field by using the above-described PTK or TPTK. In this case, in order to derive a MIC value for a user information field, the transmitting STA and/or the receiving STA may use a PTK of an STA corresponding to an AID of the corresponding user information field.

As another example, in the case of the trigger frame configuration described in Embodiment 1-3 (e.g., FIG. 13), a transmitting STA and/or a receiving STA may derive a MIC value through BIP for a common information field and a user information field by using the above-described GTK, IGTK, BIGTK, or TBGTK.

Additionally, in the case of the trigger frame configuration described in Embodiment 1-4 (e.g., FIG. 14), depending on a calculation range of an MIC value (e.g., Range 1, Range 2, or Range 3), examples related to use of a key for deriving the MIC value described above with respect to Embodiment 1-1, Embodiment 1-2, and/or Embodiment 1-3 may be extended and applied.

Next, when a trigger frame is an individually addressed trigger frame, the trigger frame configuration proposed in the present disclosure may be used as in the following examples.

For example, in the case of the trigger frame configuration described in Embodiment 1-1 (e.g., see FIG. 11), a transmitting STA and/or a receiving STA may derive a MIC value through BIP for each user information field by using the above-described PTK or TPTK. In this case, in order to derive a MIC value for a user information field, the transmitting STA and/or the receiving STA may use a PTK or a TPTK of an STA corresponding to an AID of the corresponding user information field.

As another example, in the case of the trigger frame configuration described in Embodiment 1-2 (e.g., see FIG. 12), a transmitting STA and/or a receiving STA may derive a MIC value through BIP for a common information field by using the above-described PTK or TPTK. In this case, in order to derive a MIC value for the common information field, the transmitting STA and/or the receiving STA may use a PTK or a TPTK of an STA corresponding to a receiver address (RA) of the corresponding trigger frame.

As still another example, in the case of the trigger frame configuration described in Embodiment 1-3 (e.g., FIG. 13), a transmitting STA and/or a receiving STA may derive a MIC value through BIP for a common information field and a user information field by using the above-described PTK or TPTK. In this case, in order to derive a MIC value for the common information field and the user information field, the transmitting STA and/or the receiving STA may use a PTK or a TPTK of an STA corresponding to a receiver address (RA) of the corresponding trigger frame.

Additionally, in the case of the trigger frame configuration described in Embodiment 1-4 (e.g., FIG. 14), depending on a calculation range of an MIC value (e.g., Range 1, Range 2, or Range 3), examples related to use of a key for deriving the MIC value described above with respect to Embodiment 1-1, Embodiment 1-2, and/or Embodiment 1-3 may be extended and applied.

Protection for a trigger frame based on the methods proposed in the present disclosure may be performed as follows.

For the example situations described below, it is assumed that a transmitting STA and receiving STA(s) support use of a trigger frame under BIP through a protected trigger support (sub)field and/or share a configuration method of a protection information (sub)field within a trigger frame through a protected trigger mode (sub)field.

A receiving STA may construct additional authentication data (AAD) for a trigger frame based on information of a MAC header of an MPDU received from a transmitting STA (e.g., a frame control field, a duration field, an RA field, a TA field, etc.). Thereafter, the receiving STA may calculate(/derive) a MIC value based on the MPDU by using the corresponding AAD. In this case, the receiving STA may derive the MIC value by performing, in the same manner, a process of calculating a MIC value based on the corresponding MPDU as performed by the transmitting STA

Thereafter, the receiving STA may compare the derived MIC value with a MIC value transmitted by the transmitting STA (e.g., MIC information included in a protection information (sub)field). If the two MIC values are identical, the receiving STA may follow information of the obtained MPDU. In contrast, if the two MIC values are not identical, the receiving STA may recognize that at least one piece of information within the obtained MPDU has been modified by a third STA (e.g., an attacking STA) or has been corrupted during transmission/reception, and may discard the same.

Additionally or alternatively, for coordination between APs (e.g., multi-AP coordination), a trigger frame having a configuration including one or more pieces of information for an integrity check may be transmitted and received. In this case, a method of configuring one or more pieces of information for an integrity check within the corresponding trigger frame and a method of performing an integrity check based on the one or more pieces of information may be based on the methods proposed in the present disclosure.

For example, in an information configuration for an integrity check of a trigger frame proposed in the present disclosure (e.g., a protection information (sub)field of FIG. 10), Key ID information may indicate a Key ID for a key used to generate a MIC. In this regard, it is assumed that APs recognize information on the corresponding key through prior sharing or negotiation between the APs. If use of a key is not required for MIC generation, the Key ID information may not be included in the protection information (sub)field.

Additionally or alternatively, when a trigger frame including integrity check information (e.g., the above-described protection information) based on the format proposed in Embodiment 1-4 is utilized, a specific AID value (e.g., a value indicating a specific AID 12) indicating User Info field(s) including protection information in a User Info List field may be utilized.

In this regard, an AID of a User Info field in a User Info List field included in a trigger frame transmitted and received between APs may be utilized as a random value other than an AID used between a non-AP STA and an AP. For example, the random value may be a multi-AP ID, a partial value of a MAC address of an AP, or the like. However, the AID of the User Info field in the User Info List field included in the trigger frame transmitted and received between APs is set so as not to overlap with an AID of User Info field(s) including protection information

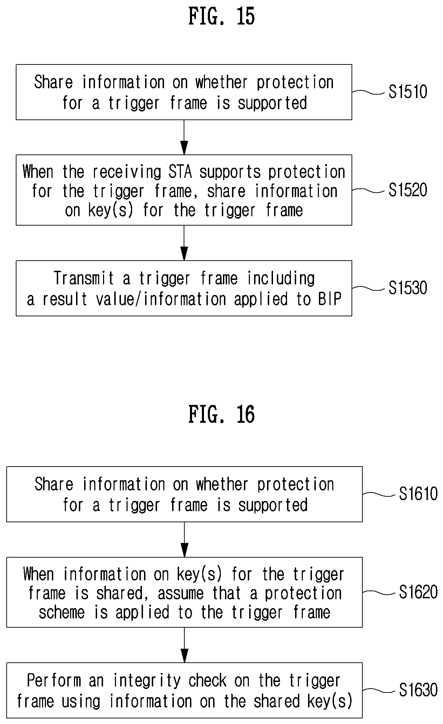

Operations of an STA supporting/performing protection for a trigger frame according to an embodiment of the present disclosure may be as shown in FIGS. 15 and 16.

FIG. 15 illustrates an operation of a transmitting STA supporting an integrity check for a trigger frame according to the present disclosure.

Referring to FIG. 15, a transmitting STA may share, with a receiving STA, information on whether protection (e.g., an integrity check) for a trigger frame is supported (S1510).

In this case, when both the transmitting STA and the receiving STA(s) apply security to the trigger frame, the transmitting STA may generate and share key(s) (e.g., PTK/GTK(s)) used for an integrity check of the trigger frame (S1520). In this regard, the transmitting STA and the receiving STA may generate/negotiate/share identical key information with each other through a key generation process, or key information generated by the transmitting STA may be delivered to the receiving STA.

Based on the corresponding key(s), the transmitting STA may configure a trigger frame including result value(s)/information obtained by applying BIP, and may transmit the corresponding trigger frame to the receiving STA(s) (S1530).

With respect to the above-described process, the transmitting STA may previously share/negotiate, with the receiving STA, information on in which format information related to an integrity check is configured within a transmitted trigger frame, or may transmit the trigger frame by including the corresponding information therein.

FIG. 16 illustrates an operation of a receiving STA supporting an integrity check for a trigger frame according to the present disclosure.

Referring to FIG. 16, a receiving STA may share, with a transmitting STA, information on whether protection (e.g., an integrity check) for a trigger frame is supported (S1610).

In this case, when key(s) used for an integrity check of a trigger frame are shared with the transmitting STA, the receiving STA may assume that a protection scheme has been applied to the trigger frame transmitted by the transmitting STA (S1620).

In this regard, the transmitting STA and the receiving STA may generate/negotiate/share identical key information (e.g., PTK/GTK, etc.) with each other through a key generation process, or key information generated by the transmitting STA may be delivered to the receiving STA.

For example, the receiving STA may receive a trigger frame transmitted from the transmitting STA and may recognize that BIP has been applied based on previously shared key(s) and/or information related to a configuration method of information for an integrity check within the trigger frame.

Based thereon, when a trigger frame is received, a receiving STA may perform an integrity check on the corresponding trigger frame by using key(s) previously shared/generated/negotiated (e.g., PTK/GTK, etc.) (S1630).

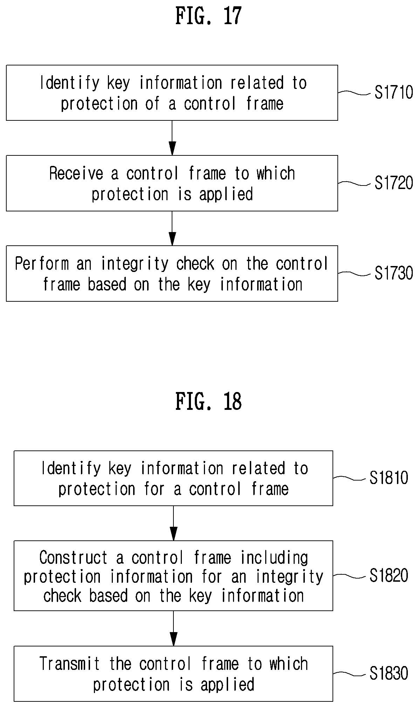

Hereinafter, FIGS. 17 and 18 illustrate operations performed by an STA according to the above-described proposed methods of the present disclosure. In FIGS. 17 and 18, a second STA may correspond to an AP/transmitting STA, and a first STA may correspond to a non-AP STA/receiving STA associated with the AP.

FIG. 17 is a diagram for describing an example of a method performed by a first STA according to the present disclosure.

Referring to FIG. 17, a first STA may identify key information related to protection for a control frame (e.g., a trigger frame) (S1710).

Herein, protection for the control frame may be based on an integrity check using BIP described above in the present disclosure. For example, at least one of BIP-CMAC-128, BIP-CMAC-256, BIP-GMAC-128, or BIP-GMAC-256 may be used as a cipher suite for the BIP.

In this regard, the first STA may negotiate/share/generate key information (related to the corresponding control frame) with a second STA in advance through a 4-way handshake process. Additionally or alternatively, the first STA may receive key information generated by the second STA.

For example, when the control frame corresponds to an individually addressed control frame, the key information may include a key (e.g., a temporal key) based on a pairwise transient key (PTK) (e.g., a TPTK, etc.) for the first STA and the second STA. In contrast, when the control frame corresponds to a group addressed control frame, the key information may include a key (e.g., a temporal key) based on a group temporal key (GTK) (e.g., a TBGTK, etc.) for the first STA and the second STA.

The first STA may receive, from the second STA, a control frame to which the above-described protection has been applied (S1720).

In this regard, a User Info List field in the corresponding control frame (e.g., a trigger frame) may include one or more specific field structures in which protection information for the above-described integrity check is included. Here, the protection information may correspond to the protection information (sub)field described above in the present disclosure (e.g., see FIG. 10). In this case, each specific field structure may include an AID field set to a value related to the corresponding protection information.

Thereafter, the first STA may perform an integrity check on the received control frame based on the identified key information (S1730).

In this regard, the protection information may include at least one of a first field related to key information, a second field related to a packet number for the control frame, or a third field related to a message integrity code (MIC) value for one or more fields in the control frame.

In this case, a number of one or more specific field structures in a User Info field may be based on a size of the MIC value. Additionally or alternatively, the MIC value may be calculated for one of 1) a Common Info field in the control frame, 2) one or more User Info fields in a User Info List field, or 3) the Common Info field and the one or more User Info fields. Here, each User Info field may include an AID field set to a value for an STA receiving the control frame.

For example, a User Info List field in the control frame may include one or more User Info fields including an AID field set to a value for an STA receiving the control frame. Here, in the User Info List field, one or more specific field structures may be positioned subsequent to the one or more User Info fields described above.

In addition, a value related to protection information in an AID field in the specific field structure may be a specific value different from a value for an STA receiving the control frame. As an example, the STA receiving the control frame may correspond to either an STA that supports protection for the control frame (e.g., a UHR STA) or an STA that does not support protection for the control frame (e.g., a pre-UHR STA).

Additionally or alternatively, in relation to the above-described procedure, protection information for an integrity check may be divided and included in one or more specific field structures in units of a preset size. The integrity check in step S1730 may be performed based on protection information obtained by concatenating values divided and included in the one or more specific field structures described above. As an example, when a size of a specific field structure is 40 bits (e.g., the same number of bits as a legacy User Info field structure), a size of an AID field may be 12 bits, and the preset size unit may be 28 bits.

Additionally or alternatively, in relation to the above-described procedure, information indicating whether protection for a control frame is supported may be transmitted and received between a first STA and the second STA. In addition, between the first STA and the second STA, with respect to the control frame, information on at least one of a frame format based on a position/configuration of protection information or a range to which the corresponding protection information is applied may be transmitted and received. As an example, the information may be included in at least one of a Common Info field or a Special User Info field in the control frame.

The method described in the example of FIG. 17 may be performed by the first device (100) of FIG. 1. That is, the first STA of FIG. 17 may be implemented as the first device (100). For example, one or more processors (102) of the first device (100) of FIG. 1 may be configured to identify key information related to protection for a control frame, receive a control frame to which protection is applied from a second STA, and perform an integrity check on the control frame based on the key information.

In this regard, the first STA may recognize whether protection/security has been applied to a trigger frame received based on information pre-shared/negotiated with the second STA. When recognizing that the corresponding protection/security has been applied, the first STA may obtain complete protection information by concatenating information for an integrity check that is partially/dividedly included in a plurality of User Info fields having a specific AID that does not overlap with AIDs of receiving STA(s). For example, the information for the integrity check may include a derived MIC value, key information for deriving the MIC value, and packet number (PN)-related information for the corresponding trigger frame. The first STA may perform an integrity check using an MIC value derived by applying the obtained protection information/value(s) to BIP.

Furthermore, one or more memories (104) of the first device (100) may store instructions for performing the method described in the example of FIG. 17 or examples described below when executed by the one or more processors (102).

FIG. 18 is a diagram for describing an example of a method performed by a second STA according to the present disclosure.

Referring to FIG. 18, a second STA may identify key information related to protection for a control frame (S1810).

Herein, protection for the control frame may be based on an integrity check using BIP described above in the present disclosure.

Thereafter, the second STA may configure a control frame including protection information for an integrity check based on the corresponding key information (S1820).

For example, the protection information may include at least one of a first field related to key information, a second field related to a packet number for the control frame, or a third field related to a message integrity code (MIC) value for one or more fields in the control frame.

Thereafter, the second STA may transmit the control frame to which the above-described protection is applied to the first STA (S1830).

A User Info List field in the corresponding control frame (e.g., a trigger frame) may include one or more specific field structures in which protection information for the above-described integrity check is included. Here, the protection information may correspond to the protection information (sub)field described above in the present disclosure (e.g., see FIG. 10). In this case, each specific field structure may include an AID field set to a value related to the corresponding protection information.

In this regard, specific details regarding protection for a control frame, key information, protection information, a specific field structure, an AID field, a frame format, an application range related to one or more fields, and the like are the same as or similar to those described with reference to FIG. 17, and thus a detailed description thereof is omitted.

The method described in the example of FIG. 18 may be performed by the second device (200) of FIG. 1. That is, the second STA of FIG. 18 may be implemented as the second device (200). For example, one or more processors (202) of the second device (200) of FIG. 1 may be configured to identify key information related to protection for a control frame, configure a trigger frame including protection-related information for one or more fields based on the key information, and transmit the control frame to which protection is applied to a first STA.

In this regard, the second STA may, based on information shared with the first STA before configuring a PPDU, apply BIP to the trigger frame and perform an operation of partially/dividedly including information related to an integrity check (e.g., a derived MIC value, key information for deriving the MIC value, a Packet Number (PN) for the corresponding trigger frame, etc.) in a plurality of User Info fields having a specific AID that does not overlap with AIDs of receiving STAs including the first STA.

Furthermore, one or more memories (204) of the second device (200) may store instructions for performing the method described in the example of FIG. 18 or examples described below when executed by the one or more processors (202).

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

The method proposed in this disclosure has been described with a focus on examples applied to IEEE 802.11-based systems, but can be applied to various wireless LANs or wireless communication systems in addition to IEEE 802.11-based systems.

## Claims

1. A method performed by a first station (STA) in a wireless local area network (WLAN) system, the method comprising:
identifying key information related to protection for a control frame;
receiving, from a second STA, the control frame to which the protection is applied; and
performing an integrity check on the control frame based on the key information,
wherein a user information list field in the control frame includes one or more specific field structures in which protection information for the integrity check is included, and
wherein each specific field structure includes an association ID (AID) field set to a value related to the protection information.

2. The method of claim 1,
wherein the protection information includes at least one of a first field related to the key information, a second field related to a packet number for the control frame, or a third field related to a message integrity code (MIC) value for one or more fields in the control frame.

3. The method of claim 2,
wherein a number of the one or more specific field structures in the user information list field is based on a size of the MIC value.

4. The method of claim 2,
wherein the MIC value is calculated for one of a common information field in the control frame, one or more user information fields in the user information list field, or the common information field and the one or more user information fields, and
wherein each user information field includes an AID field set to a value for an STA receiving the control frame.

5. The method of claim 1,
wherein the user information list field includes one or more user information fields including an AID field set to a value for an STA receiving the control frame, and
wherein a value related to the protection information is a specific value different from a value for the STA receiving the control frame.

6. The method of claim 5,
wherein, in the user information list field,
the one or more specific field structures are positioned subsequent to the one or more user information fields.

7. The method of claim 5,
wherein the STA receiving the control frame corresponds to either an STA that supports protection for the control frame or an STA that does not support protection for the control frame.

8. The method of claim 1,
wherein the protection information is divided and included in the one or more specific field structures in units of a pre-configured size.

9. The method of claim 8,
wherein the integrity check is performed based on protection information obtained by concatenating values divided and included in the one or more specific field structures.

10. The method of claim 8,
wherein, based on a size of a specific field structure being 40 bits,
a size of the AID field is 12 bits, and the pre-configured size unit is 28 bits.

11. The method of claim 1,
wherein information indicating whether protection for the control frame is supported is transmitted and received between the first STA and the second STA.

12. The method of claim 1,
wherein, for the control frame, information for at least one of a frame format based on a configuration of the protection information or a range to which the protection information is applied is transmitted and received between the first STA and the second STA.

13. The method of claim 12,
wherein the information is included in at least one of a common information field or a special user information field within the control frame.

14. The method of claim 1, wherein:
based on the control frame corresponding to an individually addressed control frame, the key information is based on a pairwise transient key (PTK) for the first STA and the second STA, and
based on the control frame corresponding to a group addressed control frame, the key information is based on a group temporal key (GTK) for the first STA and the second STA.

15. The method of claim 1,
wherein protection for the control frame is based on an integrity check using a broadcast/multicast integrity protocol (BIP), and
wherein, as a cipher suite for the BIP, BIP-CMAC-128, BIP-CMAC-256, BIP-GMAC-128, or BIP-GMAC-256 is used.

16. The method of claim 1, wherein:
the second STA is an access point (AP), and
the first STA is a non-AP STA associated with the AP.

17. A first station (STA) device in a wireless local area network (WLAN) system, the STA comprising:
at least one transceiver; and
at least one processor connected to the at least one transceiver,
wherein the at least one processor is configured to:
identify key information related to protection for a control frame;
receive, from a second STA, the control frame to which the protection is applied; and
perform an integrity check on the control frame based on the key information,
wherein a user information list field in the control frame includes one or more specific field structures in which protection information for the integrity check is included, and
wherein each specific field structure includes an association ID (AID) field set to a value related to the protection information

18. A method performed by a second station (STA) in a wireless local area network (WLAN) system, the method comprising:
identifying key information related to protection for a control frame;
constructing, based on the key information, the control frame including protection information for an integrity check; and
transmitting, to a first STA, the control frame to which the protection is applied,
wherein a user information list field in the control frame includes one or more specific field structures in which the protection information is included, and
wherein each specific field structure includes an association ID (AID) field set to a value related to the protection information.

19. A second station (STA) device in a wireless local area network (WLAN) system, the STA comprising:
at least one transceiver; and
at least one processor connected to the at least one transceiver,
wherein the at least one processor is configured to:
identify key information related to protection for a control frame;
construct, based on the key information, the control frame including protection information for an integrity check; and
transmit, to a first STA, the control frame to which the protection is applied,
wherein a user information list field in the control frame includes one or more specific field structures in which the protection information is included, and
wherein each specific field structure includes an association ID (AID) field set to a value related to the protection information.

20. A processing device configured to control a station (STA) in a wireless local area network (WLAN) system, the processing device comprising:
at least one processor; and
at least one computer memory operatively connected to the one or more processors and storing instructions that, when executed by the at least one processor, perform a method according to any one of claims 1 to 16.

21. At least one non-transitory computer-readable medium storing one or more commands,
wherein the one or more commands are executed by one or more processors to control a device in a wireless LAN system to perform a method according to any one of claims 1 to 16.
